# FASCICULE DE BREVET EUROPEEN

(11) **EP 2 725 000 B1**
(45) Date de publication et mention de la délivrance du brevet: **28.08.2019**
(21) Numéro de dépôt: 12189692.2
(22) Date de dépôt: 24.10.2012
(51) Int. Cl.: C04B 41/88, G04B 19/18, G04B 37/22

(54) **CÉRAMIQUE SÉLECTIVEMENT CONDUCTRICE ET REVÊTUE D'UN MATÉRIAU MÉTALLIQUE**
Selektiv leitende und mit Metallmaterial beschichtete Keramik
Selectively conductive ceramic coated with a metal material

(43) Date de publication de la demande: 30.04.2014
(73) Titulaire: The Swatch Group Research and Development Ltd., 2074 Marin (CH)
(72) Inventeur: Plankert, Guido, 8113 Boppelsen (CH); Vuille, Pierry, 2207 Coffrane (CH)
(74) Mandataire: Goulette, Ludivine

(56) Documents cités:
- EP-A1- 1 160 224
- EP-A1- 2 380 864
- CH-A3- 649 670
- US-A- 3 228 861
- US-A- 5 928 977

## Description

### Domaine de l'invention

L'invention se rapporte à une céramique sélectivement conductrice et, notamment, une telle céramique comportant un revêtement en matériau métallique.

### Arrière-plan de l'invention

Il est connu sur les pièces céramiques de déposer une couche d'accrochage pour adhérer à la céramique et une couche de mouillage pour qu'un futur dépôt galvanique adhère dessus comme expliqué dans les documents EP 2 380 864, US 3,228,861 et CH 649 670.

Ces deux couches peuvent toutefois être sujettes à délamination aussi bien lors de leur dépôt mais également lors de la galvanoplastie ou lors de l'utilisation de la pièce finale.

Les documents EP 1 160 224 et US 5,928,977 proposent de substituer des atomes d'oxygène en surface de la céramique par respectivement des atomes d'azote et de carbone pour former des céramiques composites.

### Résumé de l'invention

Le but de la présente invention est de pallier tout ou partie les inconvénients cités précédemment en proposant une céramique à base d'oxyde qui est sélectivement rendue conductrice sans avoir recours au dépôt d'une couche d'accrochage et, éventuellement, sans couche de mouillage.

A cet effet, l'invention se rapporte à un procédé de fabrication d'un élément en céramique pour une pièce d'horlogerie comportant les étapes suivantes :
a) former un corps en céramique à base d'oxyde ;
b) exposer à une réaction de réduction, au moins une partie de surface externe du corps afin de l'appauvrir en atomes d'oxygène selon une profondeur prédéterminée dans le but de rendre ladite au moins une partie électriquement conductrice ;
c) déposer un matériau métallique à partir de ladite au moins une partie rendue électriquement conductrice; et
d) usiner le corps et/ou le matériau métallique déposé afin de finir esthétiquement l'élément.

Avantageusement selon l'invention, la surface conductrice n'est plus obtenue par le dépôt d'une couche par-dessus le corps mais par la déstructuration intrinsèque du matériau du corps selon une profondeur prédéterminée, c'est-à-dire sans délamination possible.

De plus, l'appauvrissement peut être sélectif, c'est-à-dire que la directivité de l'appauvrissement autorise à le limiter à tout ou une partie de la surface externe.

Conformément à d'autres caractéristiques avantageuses de l'invention :
- l'étape a) est réalisée par frittage ;
- l'étape b) est réalisée par une attaque plasma ;
- le plasma utilisé lors de l'étape b) comporte un mélange ionisé d'hydrogène et de gaz neutre ;
- la profondeur prédéterminée d'appauvrissement en atomes d'oxygène est comprise entre 25 nm et 10 *µ*m ;
- lors de l'étape b), toute la surface externe du corps est exposée à une réaction de réduction ;
- selon un deuxième mode de réalisation, le procédé comporte, entre l'étape a) et l'étape b), l'étape e) graver au moins un évidement dans une face du corps, chaque au moins un évidement formant l'empreinte d'un décor afin que l'étape c) remplisse complètement ledit au moins un évidement ;
- l'étape e) est réalisée par laser ;
- l'étape e) est réalisée sur une profondeur comprise entre 80 *µ*m et 200 *µ*m afin d'améliorer la force d'accrochage ;
- chaque au moins un évidement comporte une surface continue au moins partiellement rayonnée afin de faciliter la mise en oeuvre de l'étape c) ;
- selon un troisième mode de réalisation, le procédé comporte, après l'étape e), l'étape f) graver au moins un trou communiquant avec ledit au moins un évidement afin de former un dispositif d'ancrage afin que l'étape c) remplisse complètement ledit au moins un évidement et au moins partiellement ledit au moins un trou ;
- ledit au moins un trou traverse ledit élément afin qu'il puisse être au moins partiellement rempli lors de l'étape c) par le matériau métallique afin d'augmenter la surface de contact avec ledit élément ;
- le diamètre dudit au moins un trou s'évase au fur et à mesure qu'il s'éloigne dudit au moins un évidement afin de maintenir ledit dépôt galvanique contre ledit élément ;
- l'étape f) est réalisée par laser en orientant le faisceau à partir de la face opposée à celle destinée à recevoir ledit au moins un évidement ;
- selon une variante des modes de réalisation, le procédé comporte, avant l'étape c), les étapes g) former un organe et h) assembler l'organe avec le corps afin que l'étape c) solidarise l'assemblage de l'organe avec le corps en bloquant l'organe contre ledit corps par ledit matériau métallique ;
- l'organe est formé à partir d'un même type de matériau que le corps ou à partir d'un matériau métallique ;
- l'étape c) est réalisée par galvanoplastie, par frittage ou par coulée ;
- le corps est formé à partir d'un oxyde métallique.

L'invention se rapporte également à un élément en céramique pour une pièce d'horlogerie caractérisé en ce qu'il comporte un corps à base d'oxyde et comprend au moins une partie de sa surface externe appauvrie en atomes d'oxygène de façon telle qu'elle est électriquement conductrice, qui est recouvert d'un dépôt d'un matériau métallique afin de former une partie fonctionnelle.

Conformément à d'autres caractéristiques avantageuses de l'invention :
- le corps dudit élément forme tout ou partie d'un boîtier et/ou d'un bracelet et/ou d'une lunette et/ou d'un cadran et/ou d'une glace et/ou d'un poussoir et/ou d'une couronne et/ou d'un pont et/ou d'une platine et/ou d'une masse oscillante ;
- la partie fonctionnelle forme un décor et/ou une surface de contact.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation d'une pièce d'horlogerie selon l'invention ;
- les figures 2 à 4 sont des étapes successives du procédé de fabrication selon un premier mode de réalisation de l'invention ;
- les figures 5 à 7 sont des étapes successives du procédé de fabrication selon un deuxième mode de réalisation de l'invention ;
- les figures 8 à 10 sont des étapes successives du procédé de fabrication selon un troisième mode de réalisation de l'invention ;
- la figure 11 est un schéma fonctionnel du procédé selon l'invention.

### Description détaillée des modes de réalisation préférés

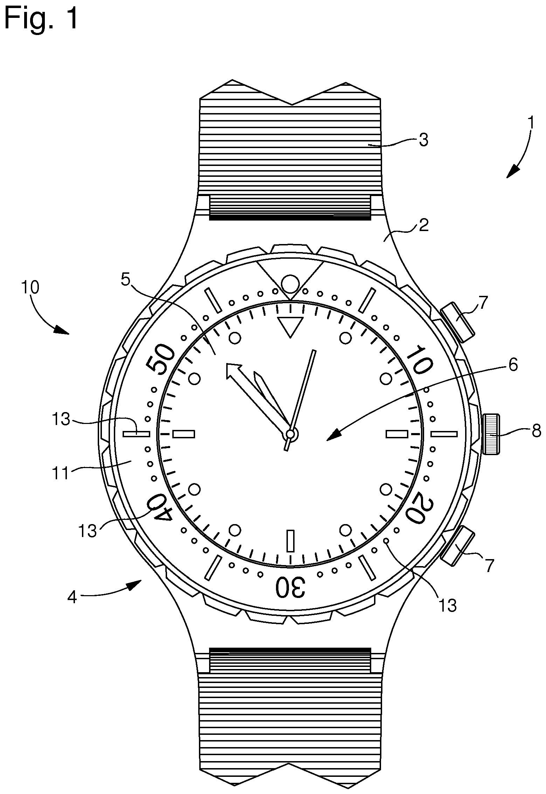

Dans l'exemple illustré à la figure 1, on peut voir une pièce d'horlogerie généralement annotée 1 comportant au moins un élément 10. Chaque élément 10 est destiné à former une pièce très résistante à l'usure comportant au moins un décor 13 au moins partiellement métallique dont la qualité visuelle est améliorée notamment en termes de contraste.

L'élément 10 selon l'invention peut notamment former indifféremment tout ou partie de l'habillage de la pièce d'horlogerie 1. Ainsi, il pourrait former tout ou partie d'un boîtier 2, d'un bracelet 3, d'une lunette 4, d'un cadran 5, d'une glace 6, d'un poussoir 7 et/ou d'une couronne 8. Dans l'exemple illustré ci-après, l'explication de l'invention sera donnée à partir d'un anneau comportant des décors 13 incrustés ou non formant les graduations d'une lunette 4. Il est également possible de former des éléments 10 incrustés ou non appartenant à un mouvement horloger comme, par exemple, un pont et/ou une platine et/ou une masse oscillante.

Comme illustré aux figures 1 à 10, l'élément céramique 10, 10', 10" comporte un corps 11, 11', 11" à base d'oxyde et comprend au moins une partie 15, 15', 15" de sa surface externe F appauvrie en atomes d'oxygène qui est recouvert d'un matériau métallique 16, 16', 16" afin de former une partie fonctionnelle comme un décor et/ou une surface de contact.

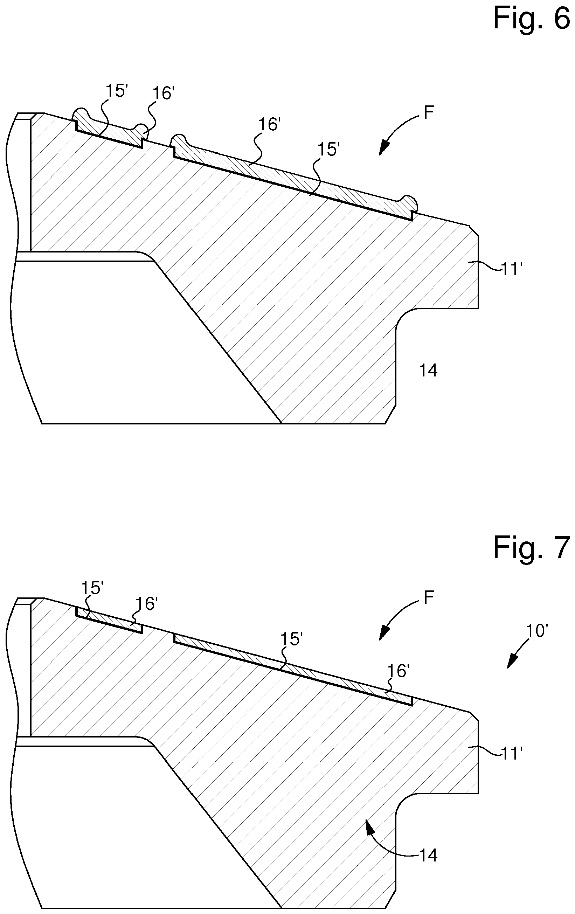

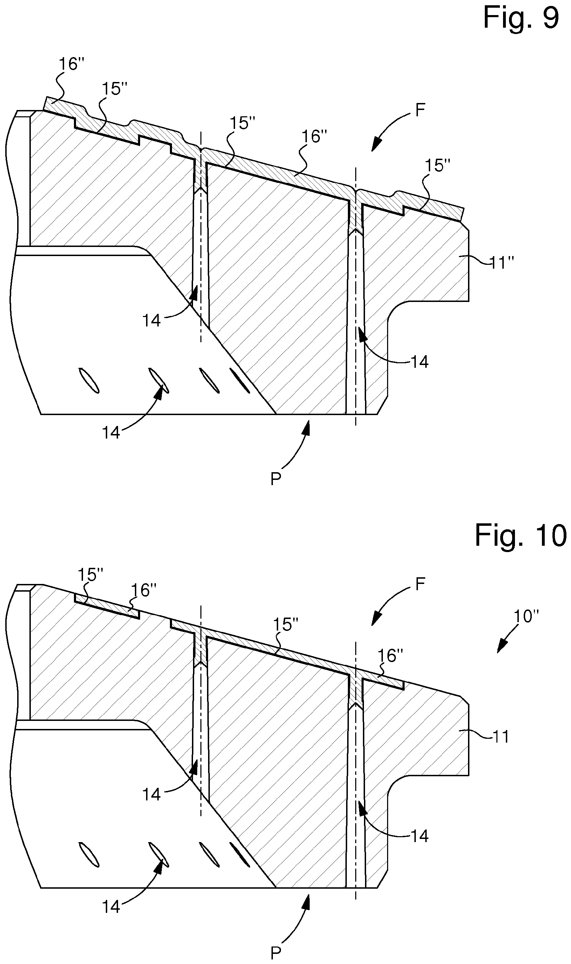

Aux figures 7 et 10 correspondant aux deuxième et troisième modes de réalisation selon l'invention, on peut voir que le corps 11', 11" peut également comporter au moins un évidement 12 formant l'empreinte d'un décor 13 destiné à recevoir le matériau métallique 16', 16". Ces configurations permettent de protéger chaque dépôt de matériau métallique 16', 16" dans le corps 11.

On comprend donc que le matériau métallique 16, 16', 16" peut, avantageusement selon l'invention, être déposé selon une forme quelconque, comme, par exemple, une figure géométrique ou un caractère alphanumérique.

Préférentiellement selon l'invention, le corps 11, 11', 11" est formé à base d'un oxyde métallique qui n'est pas électriquement conducteur. Le corps 11 peut ainsi être formé par exemple à base de zircone et/ou d'alumine et/ou de silice.

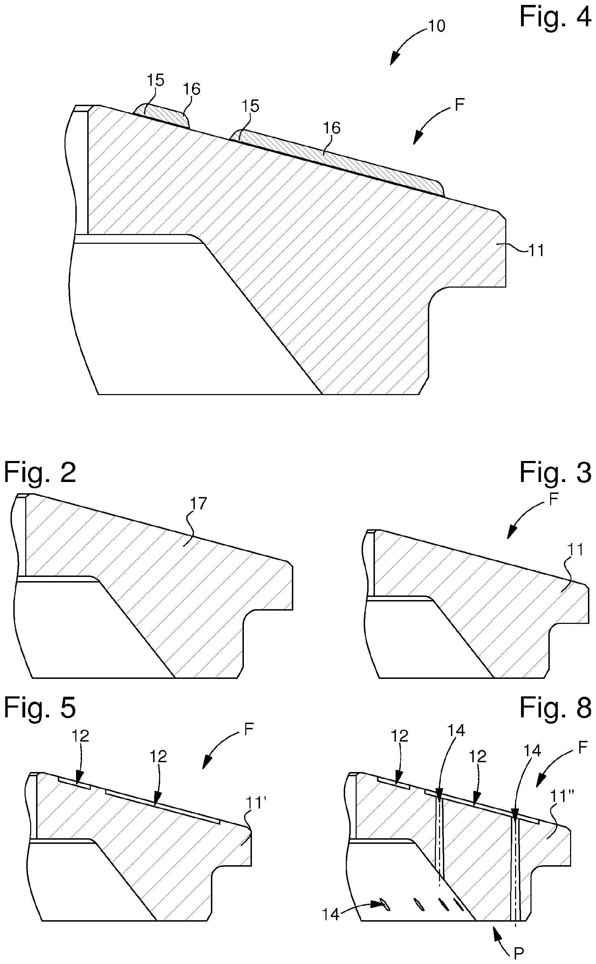

Dans un premier mode de réalisation illustré à la figure 4, le corps 11 est rendu sélectivement conducteur par un appauvrissement en atomes d'oxygène d'une partie 15 de sa surface externe F. Cet appauvrissement est réalisé selon une épaisseur prédéterminée dans le corps 11 qui peut varier entre 25 nm et 10 *µ*m suivant le type du matériau métallique 16.

On comprend donc que la surface conductrice n'est plus obtenue par le dépôt d'une couche par-dessus le corps 11, c'est-à-dire pouvant induire une délamination, mais par la déstructuration intrinsèque du matériau du corps 11 selon une profondeur prédéterminée, c'est-à-dire sans délamination possible.

De plus, avantageusement selon l'invention, l'appauvrissement peut être sélectif, c'est-à-dire que la directivité de l'appauvrissement autorise à le limiter à tout ou une partie de la surface externe F.

Comme illustré à la figure 4, l'élément 10 selon le premier mode de réalisation comporte donc un corps 11 en céramique à base d'oxyde sélectivement revêtu d'un dépôt en matériau métallique 16 afin de former une partie fonctionnelle comme un décor 13 et/ou une surface de contact. Le matériau 16 peut être du type galvanique, fritté ou coulé.

Dans un deuxième mode de réalisation illustré à la figure 7, l'élément céramique incrusté 10' comporte un corps 11' avec au moins un évidement 12 formant l'empreinte d'un décor 13. Comme dans le premier mode de réalisation, le corps 11' est rendu sélectivement conducteur par un appauvrissement en atomes d'oxygène d'une partie 15' de sa surface externe F. Cet appauvrissement est réalisé selon une épaisseur prédéterminée dans le corps 11' qui peut varier entre 25 nm et 10 *µ*m suivant le type du matériau métallique 16'.

On comprend donc que la surface conductrice n'est plus obtenue par le dépôt d'une couche par-dessus le corps 11', c'est-à-dire pouvant induire une délamination, mais par la déstructuration intrinsèque du matériau du corps 11' selon une profondeur prédéterminée, c'est-à-dire sans délamination possible.

De plus, avantageusement selon l'invention, l'appauvrissement peut être sélectif, c'est-à-dire que la directivité de l'appauvrissement autorise à le limiter à tout ou une partie de la surface externe F. Dans l'exemple des figures 6 et 7, on s'aperçoit que l'appauvrissement a été sélectivement réalisé au niveau des évidements 12.

Comme illustré à la figure 7, l'élément 10' selon le deuxième mode de réalisation comporte donc un corps 11' en céramique à base d'oxyde comportant des évidements 12 qui sont au moins partiellement remplis d'un dépôt en matériau métallique 16' afin de former une partie fonctionnelle comme un décor 13 et/ou une surface de contact. Le matériau 16' peut être du type galvanique, fritté ou coulé.

Afin d'améliorer l'accrochage du décor 13 dans le corps 11', l'évidement 12 comporte, de manière préférée, une profondeur comprise entre 80 *µ*m et 200 *µ*m.

De plus, pour des raisons d'adhérence du dépôt métallique, préférentiellement, chaque évidement 12 comporte une surface continue au moins partiellement rayonnée, c'est-à-dire que leur surface interne ne comporte pas d'arêtes.

Dans un troisième mode de réalisation illustré à la figure 10, l'élément céramique 10" comporte un corps 11" avec au moins un évidement 12 formant l'empreinte d'un décor 13. L'élément 10" comporte en outre un dispositif d'ancrage dudit au moins un décor 13 métallique communiquant avec ledit au moins un évidement 12 afin d'améliorer l'ancrage dudit au moins un décor 13 contre ledit élément 10". Préférentiellement, le dispositif d'ancrage comporte au moins un trou 14 traversant ledit élément 10" et étant au moins partiellement rempli par ledit dépôt en matériau métallique16".

Comme dans le premier et deuxième mode de réalisation, le corps 11" est rendu sélectivement conducteur par un appauvrissement en atomes d'oxygène d'une partie 15" de sa surface externe F. Cet appauvrissement est réalisé selon une épaisseur prédéterminée dans le corps 11" qui peut varier entre 25 nm et 10 *µ*m suivant le type du matériau métallique 16".

On comprend donc que la surface conductrice n'est plus obtenue par le dépôt d'une couche par-dessus le corps 11", c'est-à-dire pouvant induire une délamination, mais par la déstructuration intrinsèque du matériau du corps 11" selon une profondeur prédéterminée, c'est-à-dire sans délamination possible.

De plus, avantageusement selon l'invention, l'appauvrissement peut être sélectif, c'est-à-dire que la directivité de l'appauvrissement autorise à le limiter à tout ou une partie de la surface externe F. Dans l'exemple des figures 9 et 10, on s'aperçoit que l'appauvrissement a été sélectivement réalisé sur toute la face F c'est-à-dire y compris au niveau des évidements 12 et des trous 14.

Comme illustré à la figure 10, l'élément 10" selon le troisième mode de réalisation comporte donc un corps 11" en céramique à base d'oxyde comportant des évidements 12 qui sont entièrement remplis d'un dépôt en matériau métallique 16" solidement ancré par les trous 14 afin de former une partie fonctionnelle comme un décor 13 et/ou une surface de contact. Le matériau 16" peut être du type galvanique, fritté ou coulé.

Dans l'exemple illustré à la figure 10, il est également visible que le diamètre du trou 14 peut s'évaser au fur et à mesure qu'il s'éloigne dudit au moins un évidement 12 afin de maintenir le matériau métallique 16" contre l'élément 10". En effet, dans ce cas où le trou 14 est sensiblement conique, le diamètre du trou 14 débouchant dans l'évidement 12 étant plus petit que le reste du trou 14, les décors 13 ne peuvent plus être retirés.

Afin d'améliorer l'accrochage du décor 13 dans le corps 11", l'évidement 12 comporte, de manière préférée, une profondeur comprise entre 80 *µ*m et 200 *µ*m.

De plus, pour des raisons d'adhérence du dépôt métallique, préférentiellement, chaque évidement 12 comporte une surface continue au moins partiellement rayonnée, c'est-à-dire que leur surface interne ne comporte pas d'arêtes.

Enfin, comme expliqué ci-dessus, dans ce cas où chaque trou 14 est sensiblement conique, le diamètre du trou 14 débouchant dans l'évidement 12 étant plus petit que le reste du trou 14, les décors 13 ne peuvent plus être retirés. Préférentiellement, chaque trou 14 peut ainsi comporter un diamètre sensiblement égal à 100 *µ*m au niveau du fond de l'évidement 12 et finir avec un diamètre sensiblement égal à 120 *µ*m ou plus au niveau de la face P opposée du corps 11".

Quel que soit le mode de réalisation selon l'invention, le rendu visuel de chaque décor 13 est obtenu principalement par la teinte du matériau métallique 16, 16', 16". Par conséquent, le matériau métallique 16, 16', 16" utilisé sera préférentiellement guidé par sa teinte ou plus globalement son rendu esthétique. A ce titre, le matériau métallique 16, 16', 16" peut comporter de l'or et/ou du cuivre et/ou de l'argent et/ou de l'indium et/ou du platine et/ou du palladium et/ou du nickel.

A titre d'exemple, il est ainsi possible d'obtenir un rendu visuel complexe en donnant un aspect brillant au corps 11, 11', 11" et un aspect satiné à chaque matériau métallique 16, 16', 16". De plus, chaque matériau métallique 16, 16', 16" peut être formé avec le même métal pour offrir un aspect homogène. Toutefois, il est également envisageable que plusieurs métaux différents soient utilisés pour chaque matériau métallique 16, 16', 16" pour, par exemple, donner une teinte différente entre deux décors comme une teinte pour les index et une autre pour les caractères alphanumériques dans le cas de la figure 1.

Il est également envisageable, afin d'uniformiser les teintes, de former des décors 13 du même matériau que celui qui entoure le corps 11, 11', 11". On pourrait ainsi, dans un exemple de réalisation de la figure 1, avoir des décors 13 de lunette 4 du même matériau que le boîtier 2, le bracelet 3, le reste de la lunette 4, le cadran 5, les poussoirs 7 et/ou la couronne 8.

Avantageusement selon l'invention, il est également possible que le matériau 16, 16', 16" soit utilisé pour solidariser un organe avec le corps 11, 11', 11". En effet, au vu des modes de réalisation ci-dessus, un organe formé, par exemple à partir d'un même type de matériau que le corps 11, 11', 11" ou d'un matériau métallique, peut être bloqué contre le corps 11, 11', 11" lors du dépôt du matériau métallique 16, 16', 16". Une telle variante permettrait d'offrir plus de variété de formes et de matériaux pour les décors 13.

Enfin, optionnellement, l'élément 10, 10', 10" incrusté peut, selon l'invention, également prévoir une couche optionnelle sensiblement transparente afin de protéger chaque matériau métallique 16, 16', 16" et, éventuellement, de chaque organe, du vieillissement. Une telle couche peut, par exemple, comporter du nitrure de silicium permettant notamment de lutter contre le ternissement de chaque matériau métallique 16, 16', 16" et, éventuellement, de chaque organe, notamment lorsque de l'argent entre dans leur composition.

Le procédé de fabrication 21 d'un élément 10, 10', 10" en céramique va maintenant être expliqué à partir des figures 2 à 11.

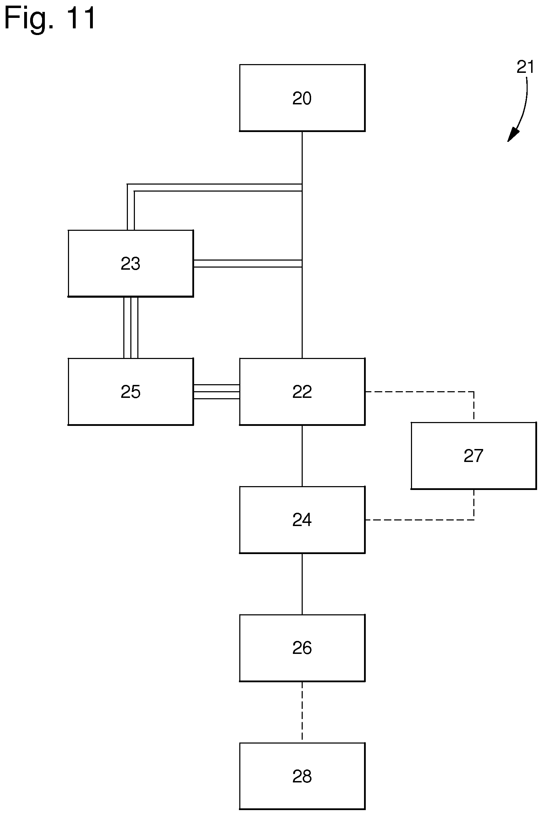

Selon le premier mode de réalisation illustré à la figure 11 en traits simples, dans une première étape 20, le procédé 21 consiste à former le corps 11 comme par exemple en zircone. Comme le montre partiellement le passage de la figure 2 à la figure 3, le corps final 11 de l'étape 20 est obtenu préférentiellement par frittage, c'est-à-dire à partir d'un corps vert 17 préformé à l'aide d'un processus d'injection. A la fin de l'étape 20, le corps 11 visible à la figure 3 comporte ses dimensions finales.

Comme illustré à la figure 11, le procédé 21 comporte une deuxième étape 22 destinée à exposer à une réaction de réduction, au moins une partie 15 de surface externe F du corps 11 afin de l'appauvrir en atomes d'oxygène selon une profondeur prédéterminée dans le but de rendre ladite au moins une partie 15 électriquement conductrice.

Selon l'invention, l'étape 22 est, de manière préférée, effectuée par une attaque plasma. Toutefois, tout moyen alternatif permettant d'appauvrir en atomes d'oxygène peut être utilisé.

Préférentiellement, le plasma utilisé lors de l'étape 22 comporte un mélange ionisé d'hydrogène et de gaz neutre qui attaque tout ou partie du corps 11.

Avantageusement selon l'invention, la profondeur prédéterminée d'appauvrissement en atomes d'oxygène est comprise entre 25 nm et 10 *µ*m en fonction du matériau métallique 16 utilisé. On comprend donc que, lors de l'étape 22, il peut être choisi que toute la surface externe F du corps 11 soit exposée à une réaction de réduction.

Comme illustré à la figure 11, le procédé 21 selon le premier mode de réalisation comporte une troisième étape 24 destinée à déposer un matériau métallique 16 à partir des parties 15 de la face F du corps 11 rendues conductrices afin de recouvrir tout ou partie de la face F comme visible à la figure 4. L'étape 24 peut, par exemple, être réalisée par galvanoplastie, par frittage ou par coulée.

Comme expliqué ci-dessus, suivant la teinte ou plus globalement le rendu visuel souhaité, le matériau métallique 16 déposé lors de l'étape 24 comporte de l'or et/ou du cuivre et/ou de l'argent et/ou de l'indium et/ou du platine et/ou du palladium et/ou du nickel.

Enfin, dans une quatrième étape 26, le procédé 21 se termine en usinant le corps 11 et/ou le matériau métallique 16 afin de finir esthétiquement l'élément 10. L'élément 10 revêtu est ainsi terminé et n'a, éventuellement, plus qu'à être monté sur une pièce finale. Cette étape 26 peut être obtenue par une méthode de surfaçage habituelle comme un meulage ou un rodage pour enlever le surplus de matière suivi d'un polissage.

Comme expliqué ci-dessus, le procédé peut également comporter, avant l'étape 24, les étapes respectives destinées à former un organe puis à assembler l'organe avec le corps 11. On comprend alors que l'étape 24 permet de solidariser l'assemblage de l'organe avec le corps 11 en bloquant l'organe contre ledit corps par ledit matériau métallique. A cet effet, le corps et/ou l'organe peuvent comporter au moins une géométrie plane ou non destinée à être recouverte par le matériau métallique 16 afin de solidariser l'assemblage.

A titre d'exemple, l'organe peut être formé à partir d'un même type de matériau que le corps 11, c'est-à-dire une céramique obtenue selon l'étape 20 ou une céramique rendue conductrice selon les étapes 20 et 22, ou encore à partir d'un matériau métallique.

Enfin, le procédé 21 selon l'invention, peut également prévoir une dernière étape optionnelle 28 destinée à déposer une couche sensiblement transparente afin de protéger chaque matériau métallique 16 et, éventuellement, de chaque organe, du vieillissement. Une telle couche peut, par exemple, comporter du nitrure de silicium permettant notamment de lutter contre le ternissement du matériau métallique 16 et, éventuellement, de chaque organe, surtout lorsque celui-ci est formé principalement à base d'argent.

Selon le deuxième mode de réalisation illustré à la figure 11 en traits doubles, la première étape 20 est identique au premier mode de réalisation. Comme illustré à la figure 11, le procédé 21, selon le deuxième mode de réalisation, comporte une deuxième étape 23 destinée à graver au moins un évidement 12 borgne dans une face F du corps 11' en céramique, les évidements 12 formant l'empreinte des futurs décors 13 comme visible à la figure 5.

Préférentiellement, chaque évidement 12 comporte une profondeur comprise entre 80 et 200*µ*m. De plus, de manière préférée, chaque évidement 12 comporte une surface continue au moins partiellement rayonnée afin de faciliter la mise en oeuvre de l'étape 24 de dépôt expliqué ci-dessous. L'étape 23 est préférentiellement obtenue par un rayonnement destructif au moyen d'un laser permettant d'obtenir une bonne précision des gravures.

Comme illustré à la figure 11, le procédé 21, selon le deuxième mode de réalisation, comporte une troisième étape 22 destinée à exposer à une réaction de réduction, au moins une partie 15' de surface externe F du corps 11' afin de l'appauvrir en atomes d'oxygène selon une profondeur prédéterminée dans le but de rendre ladite au moins une partie 15' électriquement conductrice avec les mêmes caractéristiques, les mêmes effets techniques et les mêmes avantages que pour le premier mode de réalisation.

On comprend donc que, lors de l'étape 22, il peut être choisi que toute ou partie de la surface externe F du corps 11' soit exposée à une réaction de réduction. Dans l'exemple illustré aux figures 6 et 7, on s'aperçoit que l'appauvrissement a été sélectivement réalisé au niveau des évidements 12.

Comme illustré à la figure 11, le procédé 21 selon le deuxième mode de réalisation comporte une quatrième étape 24 destinée à déposer un matériau métallique 16' à partir des parties 15' de la face F du corps 11' rendues conductrices afin de recouvrir tout ou partie de la face F comme visible à la figure 6 avec les mêmes caractéristiques, les mêmes effets techniques et les mêmes avantages que pour le premier mode de réalisation. L'étape 24 peut, par exemple, être réalisée par galvanoplastie, par frittage ou par coulée.

On s'aperçoit, avantageusement selon l'invention, que le matériau 16' peut ainsi ne pas remplir complètement chaque évidement 12, c'est-à-dire que certains évidements 12 peuvent ne pas être remplis ou même que certains évidements peuvent n'être remplis que selon une profondeur et/ou une section inférieures par rapport à celles de son évidement 12 associé. On comprend donc qu'un gain de matière de matériau métallique 16 ainsi qu'un gain de temps pour l'étape 26 (moins de matière à usiner) peuvent être obtenus.

Enfin, dans une cinquième étape 26 illustrée à la figure 7, le procédé 21 se termine en usinant le corps 11' et/ou le matériau métallique 16' afin de finir esthétiquement l'élément 10'. L'élément 10' revêtu et/ou incrusté est ainsi terminé et n'a, éventuellement, plus qu'à être monté sur une pièce finale. Cette étape 26 peut être obtenue avec les mêmes caractéristiques, les mêmes effets techniques et les mêmes avantages que pour le premier mode de réalisation.

Comme expliqué ci-dessus, le procédé selon le deuxième mode de réalisation peut également comporter, avant l'étape 24, les étapes respectives destinées à former un organe puis à assembler l'organe avec le corps 11'. On comprend alors que l'étape 24 permet de solidariser l'assemblage de l'organe avec le corps 11' en bloquant l'organe contre ledit corps par ledit matériau métallique. A cet effet, le corps et/ou l'organe peuvent comporter au moins une géométrie plane ou non destinée à être recouverte par le matériau métallique 16' afin de solidariser l'assemblage.

A titre d'exemple, l'organe peut être formé à partir d'un même type de matériau que le corps 11', c'est-à-dire une céramique obtenue selon l'étape 20 ou une céramique rendue conductrice selon les étapes 20 et 22, ou encore à partir d'un matériau métallique.

Enfin, le procédé 21 selon le deuxième mode de réalisation peut également prévoir une dernière étape optionnelle 28 destinée à déposer une couche sensiblement transparente afin de protéger chaque matériau métallique 16' du vieillissement avec les mêmes caractéristiques, les mêmes effets techniques et les mêmes avantages que pour le premier mode de réalisation.

Selon le troisième mode de réalisation illustré à la figure 11 en traits triples, la première étape 20 est identique au premier mode de réalisation. Comme illustré à la figure 11, le procédé 21, selon le troisième mode de réalisation, comporte une deuxième étape 23 destinée à graver au moins un évidement 12 borgne dans une face F du corps 11' en céramique, les évidements 12 formant l'empreinte des futurs décors 13 comme visible à la figure 8 avec les mêmes caractéristiques, les mêmes effets techniques et les mêmes avantages que pour le deuxième mode de réalisation.

Comme illustré à la figure 11, le procédé 21, selon le troisième mode de réalisation, se poursuit selon une troisième étape 25 destinée à graver au moins un trou 14 communiquant avec chaque évidement 12 afin de former un dispositif d'ancrage. Comme visible à la figure 8, suivant la forme et l'étendue de chaque évidement 12, un ou plusieurs trous 14 sont réalisés pour chaque évidement 12. L'étape 25 est préférentiellement obtenue par un rayonnement destructif au moyen d'un laser permettant d'obtenir une bonne précision des gravures.

Selon l'invention, chaque trou 14 traverse le corps 11" de l'élément 10" afin qu'il puisse être au moins partiellement rempli lors de l'étape 24 par le matériau métallique 16" afin d'augmenter la surface de contact avec ledit élément. En effet, on comprend notamment que de la matière peut ainsi circuler « devant » et « derrière » l'évidement 12, c'est-à-dire qu'il peut être déposé dans chaque évidement 12 et dans chaque trou 14 à tout moment de l'étape 24.

Enfin, comme visible à la figure 8, le diamètre de chaque trou 14 s'évase au fur et à mesure qu'il s'éloigne dudit au moins un évidement 12 afin de bloquer le futur matériau 16" métallique contre l'élément 10". En effet, comme expliqué ci-dessus, dans ce cas où chaque trou 14 est sensiblement conique, le diamètre du trou 14 débouchant dans l'évidement 12 étant plus petit que le reste du trou 14, chaque matériau métallique 16" ne peut plus être retiré. Préférentiellement, chaque trou 14 peut ainsi comporter un diamètre sensiblement égal à 100 *µ*m au niveau du fond de l'évidement 12 et finir avec un diamètre sensiblement égal à 120 *µ*m ou plus au niveau de la face P opposée du corps 11".

Préférentiellement, l'étape 25 est, avantageusement selon l'invention, réalisée en orientant le faisceau laser à partir de la face P opposée afin de former directement lesdits au moins un trou 14 de manière conique, c'est-à-dire dans lequel le plus grand diamètre est à la jonction avec la face P opposée.

Comme illustré à la figure 11, le procédé 21, selon le troisième mode de réalisation, comporte une quatrième étape 22 destinée à exposer à une réaction de réduction, au moins une partie 15" de surface externe F du corps 11" afin de l'appauvrir en atomes d'oxygène selon une profondeur prédéterminée dans le but de rendre ladite au moins une partie 15" électriquement conductrice avec les mêmes caractéristiques, les mêmes effets techniques et les mêmes avantages que pour le premier et le deuxième modes de réalisation.

On comprend donc que, lors de l'étape 22, il peut être choisi que toute ou partie de la surface externe F du corps 11" soit exposée à une réaction de réduction. Dans l'exemple illustré aux figures 9 et 10, on s'aperçoit que l'appauvrissement a été sélectivement réalisé sur toute la face F c'est-à-dire y compris au niveau des évidements 12 et des trous 14.

Comme illustré à la figure 11, le procédé 21 selon le troisième mode de réalisation comporte une cinquième étape 24 destinée à déposer un matériau métallique 16" à partir des parties 15" de la face F du corps 11" rendues conductrices afin de recouvrir tout ou partie de la face F comme visible à la figure 9 avec les mêmes caractéristiques, les mêmes effets techniques et les mêmes avantages que pour le premier et deuxième modes de réalisation. L'étape 24 peut, par exemple, être réalisée par galvanoplastie, par frittage ou par coulée.

Afin de faciliter ces remplissages, préférentiellement, un renouvellement de matière dans les évidements 12 et les trous 14, est forcé par agitation ou par vibration afin d'éviter des problèmes de remplissage des évidements 12 et des trous 14.

On s'aperçoit, avantageusement selon l'invention, que le matériau 16" peut ainsi ne pas remplir complètement chaque évidement 12 et/ou chaque trou 14, c'est-à-dire que certains évidements 12 ne comportant pas de trou 14 peuvent ne pas être remplis ou même que certains évidements 12 et/ou trous 14 peuvent n'être remplis que selon une profondeur et/ou une section inférieures par rapport à celles de son évidement 12 et/ou son trou 14 associés. On comprend donc qu'un gain de matière de matériau métallique 16 ainsi qu'un gain de temps pour l'étape 26 (moins de matière à usiner) peuvent être obtenus.

Enfin, dans une sixième étape 26 illustrée à la figure 10, le procédé 21 se termine en usinant le corps 11" et/ou le matériau métallique 16" afin de finir esthétiquement l'élément 10". L'élément 10" revêtu et/ou incrusté est ainsi terminé et n'a, éventuellement, plus qu'à être monté sur une pièce finale. Cette étape 26 peut être obtenue avec les mêmes caractéristiques, les mêmes effets techniques et les mêmes avantages que pour le premier et le deuxième modes de réalisation.

Comme expliqué ci-dessus, le procédé selon le troisième mode de réalisation peut également comporter, avant l'étape 24, les étapes respectives destinées à former un organe puis à assembler l'organe avec le corps 11". On comprend alors que l'étape 24 permet de solidariser l'assemblage de l'organe avec le corps 11" en bloquant l'organe contre ledit corps par ledit matériau métallique. A cet effet, le corps et/ou l'organe peuvent comporter au moins une géométrie plane ou non destinée à être recouverte par le matériau métallique 16" afin de solidariser l'assemblage.

A titre d'exemple, l'organe peut être formé à partir d'un même type de matériau que le corps 11", c'est-à-dire une céramique obtenue selon l'étape 20 ou une céramique rendue conductrice selon les étapes 20 et 22, ou encore à partir d'un matériau métallique.

Enfin, le procédé 21 selon le troisième mode de réalisation peut également prévoir une dernière étape optionnelle 28 destinée à déposer une couche sensiblement transparente afin de protéger chaque matériau métallique 16" du vieillissement avec les mêmes caractéristiques, les mêmes effets techniques et les mêmes avantages que pour le premier et deuxième modes de réalisation.

Bien entendu, la présente invention ne se limite pas à l'exemple illustré mais est susceptible de diverses variantes et modifications qui apparaîtront à l'homme de l'art. En particulier, suivant la capacité d'adhérence du dépôt galvanique, une étape 27 de dépôt d'une couche optionnelle de mouillage pour le dépôt galvanique peut être prévue entre l'étape 22 et l'étape 24 comme illustré à la figure 11.

Ainsi, une couche, par exemple de sensiblement 50 nm, peut être déposée entre chaque matériau métallique 16, 16', 16" et le corps 11, 11', 11". Suivant le mode de dépôt de la couche de mouillage, il peut être envisagé plusieurs types de matériaux, comme, par exemple, de l'or et/ou du cuivre et/ou de l'argent et/ou de l'indium et/ou du platine et/ou du palladium et/ou du nickel.

De plus, la réalisation des évidements 12 lors de l'étape 23 pourrait être intervertie avec celle des trous 14 de l'étape 25 sans diminution des avantages de l'invention. Il est également envisageable de substituer le gravage par laser de l'étape 23 et/ou de l'étape 25 par un autre type de gravage si sa précision et son taux de rebut est acceptable.

Enfin, l'application de l'élément 10, 10', 10" selon l'invention ne saurait se limiter à une pièce d'horlogerie 1. Ainsi, l'élément 10, 10', 10" pourrait, à titre d'exemple, être appliqué à un article de bijouterie ou de joaillerie ou encore aux arts de la table.

## Revendications

1. Procédé de fabrication (21) d'un élément en céramique (10, 10', 10") pour une pièce d'horlogerie comportant les étapes suivantes :
a) former (20) un corps (11, 11', 11") en céramique à base d'oxyde ;
b) exposer (22) à une réaction de réduction, au moins une partie (15, 15', 15") de surface externe (F) du corps (11, 11', 11") afin de l'appauvrir en atomes d'oxygène selon une profondeur prédéterminée dans le but de rendre ladite au moins une partie (15, 15', 15") électriquement conductrice ;
c) déposer (24) un matériau métallique (16, 16', 16") à partir de ladite au moins une partie (15, 15', 15") rendue électriquement conductrice ; et
d) usiner (26) le corps (11, 11', 11") et/ou le matériau métallique déposé (16, 16', 16") afin de finir esthétiquement l'élément (10, 10', 10").

2. Procédé (21) selon la revendication précédente, **caractérisé en ce que** l'étape a) est réalisée par frittage.

3. Procédé (21) selon la revendication 1 ou 2, **caractérisé en ce que** l'étape b) est réalisée par une attaque plasma.

4. Procédé (21) selon la revendication précédente, **caractérisé en ce que** le plasma utilisé lors de l'étape b) comporte un mélange ionisé d'hydrogène et de gaz neutre.

5. Procédé (21) selon l'une des revendications précédentes, **caractérisé en ce que** la profondeur prédéterminée d'appauvrissement en atomes d'oxygène est comprise entre 25 nm et 10 *µ*m.

6. Procédé (21) selon l'une des revendications précédentes, **caractérisé en ce que**, lors de l'étape b), toute la surface externe (F) du corps (11, 11', 11") est exposée à la réaction de réduction.

7. Procédé (21) selon l'une des revendications précédentes, **caractérisé en ce que** le procédé comporte, entre l'étape a) et l'étape b), l'étape suivante :
e) graver (23) au moins un évidement (12) dans une face (F) du corps (11', 11"), chaque au moins un évidement formant l'empreinte d'un décor (13) ;
et **en ce que** l'étape c) remplit complètement ledit au moins un évidement.

8. Procédé (21) selon la revendication précédente, **caractérisé en ce que** l'étape e) est réalisée par laser.

9. Procédé (21) selon la revendication 7 ou 8, **caractérisé en ce que** l'étape e) est réalisée sur une profondeur comprise entre 80 *µ*m et 200 *µ*m afin d'améliorer la force d'accrochage.

10. Procédé (21) selon l'une des revendications 7 à 9, **caractérisé en ce que** chaque au moins un évidement (12) comporte une surface continue au moins partiellement rayonnée (R) afin de faciliter la mise en oeuvre de l'étape c).

11. Procédé (21) selon l'une des revendications 7 à 10, **caractérisé en ce que** le procédé comporte, après l'étape e), l'étape suivante :
f) graver (25) au moins un trou (14) communiquant avec ledit au moins un évidement (12) afin de former un dispositif d'ancrage ;
et **en ce que** l'étape c) remplit complètement ledit au moins un évidement (12) et au moins partiellement ledit au moins un trou (14).

12. Procédé (21) selon la revendication précédente, **caractérisé en ce que** ledit au moins un trou (14) traverse ledit élément afin qu'il puisse être au moins partiellement rempli lors de l'étape c) par le matériau métallique (16") afin d'augmenter la surface de contact avec ledit élément.

13. Procédé (21) selon la revendication précédente, **caractérisé en ce que** le diamètre dudit au moins un trou (14) s'évase au fur et à mesure qu'il s'éloigne dudit au moins un évidement (12) afin de maintenir ledit matériau métallique déposé (16"') contre ledit élément.

14. Procédé (21) selon l'une des revendications 11 à 13, **caractérisé en ce que** l'étape f) est réalisée par laser en orientant le faisceau à partir de la face (P) opposée à celle (F) destinée à recevoir ledit au moins un évidement (12).

15. Procédé (21) selon l'une des revendications précédentes, **caractérisé en ce qu'**il comporte, avant l'étape c), les étapes suivantes :
g) former un organe ;
h) assembler l'organe avec le corps (11, 11', 11") ;
et **en ce que** l'étape c) solidarise l'assemblage de l'organe avec le corps (11, 11', 11") en bloquant l'organe contre ledit corps par ledit matériau métallique déposé.

16. Procédé (21) selon la revendication précédente, **caractérisé en ce que** l'organe est formé à partir d'un même type de matériau que le corps (11, 11', 11").

17. Procédé (21) selon la revendication 15, **caractérisé en ce que** l'organe est formé à partir d'un matériau métallique.

18. Procédé (21) selon l'une des revendications précédentes, **caractérisé en ce que** l'étape c) est réalisée par galvanoplastie, par frittage ou par coulée.

19. Procédé (21) selon l'une des revendications précédentes, **caractérisé en ce que** le corps (11, 11', 11") est formé à partir d'un oxyde métallique.

20. Elément (10, 10', 10") en céramique pour une pièce d'horlogerie (1) **caractérisé en ce qu'**il comporte un corps (11, 11', 11") en céramique à base d'oxyde comprenant au moins une partie (15, 15', 15") de sa surface externe (F) appauvrie en atomes d'oxygène de façon telle qu'elle est électriquement conductrice, qui est recouvert d'un dépôt d'un matériau métallique (16, 16', 16") afin de former une partie fonctionnelle.

21. Elément (10, 10', 10") selon la revendication précédente, **caractérisé en ce que** le corps (11, 11', 11") dudit élément forme tout ou partie d'un boîtier (2) et/ou d'un bracelet (3) et/ou d'une lunette (4) et/ou d'un cadran (5) et/ou d'une glace (6) et/ou d'un poussoir (7) et/ou d'une couronne (8) et/ou d'un pont et/ou d'une platine et/ou d'une masse oscillante.

22. Elément (10, 10', 10") selon la revendication 20 ou 21, **caractérisé en ce que** la partie fonctionnelle forme un décor (13) et/ou une surface de contact.

## Patentansprüche

1. Verfahren zur Herstellung (21) eines Keramikelements (10, 10', 10") für eine Uhr mit den folgenden Schritten:
a) Bilden (20) eines Körpers (11, 11', 11") aus Oxidkeramik;
b) Aussetzen (22) einer Reduktionsreaktion mindestens eines Teils (15, 15', 15") der Außenfläche (F) des Körpers (11, 11', 11"), um Sauerstoffatome bis zu einer vorbestimmten Tiefe zu entziehen um den mindestens einen Teil (15, 15', 15") elektrisch leitfähig zu machen;
c) Abscheiden (24) eines metallischen Materials (16, 16', 16") auf das mindestens eineTeil (15, 15', 15"), das elektrisch leitfähig gemacht ist und
d) Bearbeiten (26) des Körpers (11, 11', 11") und/oder des zum ästhetischen Fertigstellen des Elements (10, 10', 10") abgeschiedenen metallischen Materials (16, 16', 16").

2. Verfahren (21) nach dem vorhergehenden Anspruch, **dadurch gekennzeichnet, dass** der Schritt a) durch Sintern durchgeführt wird.

3. Verfahren (21) nach Anspruch 1 oder 2, **dadurch gekennzeichnet, dass** der Schritt b) durch Plasma-Ätzen durchgeführt wird.

4. Verfahren (21) nach dem vorhergehenden Anspruch, **dadurch gekennzeichnet, dass** das in Schritt b) verwendete Plasma ein ionisiertes Gemisch aus Wasserstoff und neutralem Gas umfasst.

5. Verfahren (21) nach einem der vorhergehenden Ansprüche, **dadurch gekennzeichnet, dass** die vorgegebene Tiefe des Sauerstoffatomentzugs zwischen 25 nm und 10 µm liegt.

6. Verfahren (21) nach einem der vorstehenden Ansprüche, **dadurch gekennzeichnet, dass** in Schritt b) die gesamte Außenfläche (F) des Körpers (11, 11', 11") der Reduktionsreaktion ausgesetzt ist.

7. Verfahren (21) nach einem der vorhergehenden Ansprüche, **dadurch gekennzeichnet, dass** das Verfahren zwischen Schritt a) und Schritt b) den folgenden Schritt umfasst:
e) Stechen (23) mindestens einer Aussparung (12) in einer Fläche (F) des Körpers (11', 11"), wobei jede mindestens eine Aussparung den Abdruck einer Verzierung (13) bildet;
und dass in Schritt c) die mindestens eine Aussparung vollständig ausgefüllt wird.

8. Verfahren (21) nach dem vorhergehenden Anspruch, **dadurch gekennzeichnet, dass** Schritt e) mittels Laser durchgeführt wird.

9. Verfahren (21) nach Anspruch 7 oder 8, **dadurch gekennzeichnet, dass** Schritt e) über eine Tiefe zwischen 80 µm und 200µm durchgeführt wird, um die Haltekraft zu verbessern.

10. Verfahren (21) nach einem der Ansprüche 7 bis 9, **dadurch gekennzeichnet, dass** jede mindestens eine Aussparung (12) eine kontinuierliche, zumindest teilweise glänzende (R) Fläche aufweist, um die Durchführung von Schritt c) zu erleichtern.

11. Verfahren (21) nach einem der Ansprüche 7 bis 10, **dadurch gekennzeichnet, dass** das Verfahren nach Schritt e) den folgenden Schritt umfasst:
f) Stechen (25) mindestens eines Lochs (14), das mit der Aussparung (12) in Verbindung steht, um eine Verankerungsvorrichtung zu bilden;
und dass in Schritt c) die mindestens eine Aussparung (12) vollständig und das mindestens eine Loch (14) zumindest teilweise ausgefüllt werden.

12. Verfahren (21) nach dem vorhergehenden Anspruch, **dadurch gekennzeichnet, dass** das mindestens eine Loch (14) durch das Element hindurchgeht, damit es in Schritt c) durch das metallische Material (16") zumindest teilweise gefüllt werden kann, um die Kontaktfläche mit dem Element zu vergrößern.

13. Verfahren (21) nach dem vorhergehenden Anspruch, **dadurch gekennzeichnet, dass** sich der Durchmesser des mindestens einen Lochs (14) in dem Maße aufweitet, wie sich die mindestens eine Aussparung (12) erweitert, um das abgeschiedene metallische Material (16"') an dem Element zu halten.

14. Verfahren (21) nach einem der Ansprüche 11 ä 13, **dadurch gekennzeichnet, dass** Schritt f) mittels Laser durchgeführt wird, indem der Strahl gerichtet wird ausgehend von der Seite (P) auf die gegenüberliegende (F), die zur Aufnahme der mindestens einen Aussparung (12) vorgesehen ist.

15. Verfahren (21) nach einem der vorhergehenden Ansprüche, **dadurch gekennzeichnet, dass** es vor Schritt c) die folgenden Schritte umfasst:
g) Bilden eines Organs;
h) Zusammenbauen des Organs mit dem Körper (11, 11', 11");
und dass Schritt c) den Zusammenbau des Organs mit dem Körper (11, 11', 1 1") festigt durch Festsetzen des Organs gegen den Körper durch das abgeschiedene metallische Material.

16. Verfahren (21) nach dem vorhergehenden Anspruch, **dadurch gekennzeichnet, dass** das Organ aus der gleichen Art von Material wie der Körper (11, 11'11") gebildet ist.

17. Verfahren (21) nach Anspruch 15, **dadurch gekennzeichnet, dass** das Organ aus einem metallischen Material gebildet ist.

18. Verfahren (21) nach einem der vorhergehenden Ansprüche, **dadurch gekennzeichnet, dass** Schritt c) durch Galvanoformung, durch Sintern oder durch Gießen durchgeführt wird.

19. Verfahren (21) nach einem der vorhergehenden Ansprüche, **dadurch gekennzeichnet, dass** der Körper (11, 11', 11") aus einem Metalloxid gebildet ist.

20. Keramikelement (10, 10', 10") für eine Uhr (1), **dadurch gekennzeichnet, dass** es einen Keramikkörper (11, 11', 11") auf Oxidbasis umfasst, umfassend mindestens einen Teil (15, 15', 15") seiner Außenfläche (F), der Sauerstoffatome entzogen sind, so dass sie elektrisch leitfähig ist, der mit einer Abscheidung eines metallischen Materials (16, 16', 16") beschichtet ist, um einen Funktionsteil zu bilden.

21. Element (10, 10', 10") nach dem vorhergehenden Anspruch, **dadurch gekennzeichnet, dass** der Körper (11, 11', 11") des Elements ganz oder teilweise ein Gehäuse (2) und/oder ein Armband (3) und/oder eine Lünette (4) und/oder ein Zifferblatt (5) und/oder ein Glas (6) und/oder einen Drücker (7) und/oder einen Krone (8) und/oder eine Brücke und/oder eine Platte und/oder ein Schwingmasse bildet.

22. Element (10, 10', 10") nach Anspruch 20 oder 21, **dadurch gekennzeichnet, dass** der Funktionsteil eine Verzierung (13) und/oder eine Kontaktfläche bildet.

## Claims

1. Method (21) of manufacturing a ceramic element (10, 10', 10") for a timepiece comprising the following steps:
a) forming (20) a body (11, 11', 11") made of oxide based ceramic;
b) exposing (22) at least one portion (15, 15', 15") of the external surface (F) of the body (11, 11', 11") to a reduction reaction, to remove oxygen atoms to a predetermined depth in order to make said at least one portion (15, 15', 15") electrically conductive;
c) depositing (24) a metallic material (16, 16', 16") starting from said at least one electrically conductive portion (15, 15', 15"), and
d) machining (26) the body (11, 11', 11") and/or the deposited metallic material (16, 16', 16") in order to provide the element (10, 10', 10") with an aesthetic finish.

2. Method (21) according to the preceding claim, **characterized in that** step a) is achieved by sintering.

3. Method (21) according to claim 1 or 2, **characterized in that** step b) is achieved by plasma etching.

4. Method (21) according to the preceding claim, **characterized in that** the plasma used in step b) includes an ionised mixture of hydrogen and neutral gas.

5. Method (21) according to any of the preceding claims, **characterized in that** the predetermined depth of oxygen atoms removal is comprised between 25 nm et 10 µm.

6. Method (21) according to any of the preceding claims, **characterized in that** in step b), the entire external surface (F) of the body (11, 11', 11") is exposed to the reduction reaction.

7. Method (21) according to any of the preceding claims, **characterized in that**, between step a) and step b), the method includes the following step:
e) etching (23) at least one recess (12) in one surface (F) of the body (11', 11"), each at least one recess forming the pattern cavity for a decoration (13);
and **in that** step c) completely fills said at least one recess.

8. Method (21) according to the preceding claim, **characterized in that** step e) is achieved by laser.

9. Method (21) according to claim 7 or 8, **characterized in that** step e) is performed to a depth of between 80 µm and 200 µm in order to improve the force of adherence.

10. Method (21) according to any of claims 7 to 9, **characterized in that** each at least one recess (12) includes a continuous or at least partially curved surface (R) in order to facilitate the implementation of step c).

11. Method (21) according to any of claims 7 to 10, **characterized in that** after step e), the method includes the following step:
f) etching at least one hole (14) communicating with said at least one recess (12) in order to form an anchorage device;
and **in that** step c) completely fills said at least one recess (12) and at least partially fills said at least one hole (14);

12. Method (21) according to the preceding claim, **characterized in that** said at least one hole (14) traverses said element and is at least partially filled in step c) by the metallic material (16") so as to increase the contact surface with said element.

13. Method (21) according to the preceding claim, **characterized in that** the diameter of said at least one hole (14) flares gradually as the hole moves further away from said at least one recess (12) in order hold said deposited metallic material (16") against said element

14. Method (21) according to any of claims 11 to 13, **characterized in that** step f) is achieved by laser by orienting the beam from the surface (P) opposite the surface (F) intended to receive said at least one recess (12).

15. Method (21) according to any of the preceding claims, **characterized in that** after step c), the method includes the following step:
g) forming a member;
h) assembling the member to the body (11, 11', 11");
and **in that** that step c) secures the assembly of the member to the body (11, 11', 11") by locking the member against said body via said deposited metallic material.

16. Method (21) according to the preceding claim, **characterized in that** the member is formed from the same type of material as the body (11, 11', 11").

17. Method (21) according to claim 15, **characterized in that** member is formed from a metallic material.

18. Method (21) according to any of the preceding claims, **characterized in that** step c) is achieved by electroplating, sintering or casting.

19. Method (21) according to any of the preceding claims, **characterized in that** the body (11, 11', 11") is formed from a metal oxide.

20. Ceramic element (10, 10', 10") for a timepiece (1), **characterized in that** it comprises an oxide-based ceramic body (11, 11', 11") comprising at least one portion (15, 15' 15") of the external surface (F) low in oxygen atoms in such a way that it is electrically conductive which is coated with a deposit of metallic material (16, 16', 16") in order to form a functional part.

21. Element (10, 10', 10") according to the preceding claim, **characterized in that** the body (11, 11', 11") of said element forms all or part of a case (2) and/or a bracelet (3) and/or a bezel (4) and/or a dial (5) and/or a crystal (6) and/or a push-button (7) and/or a crown (8) and/or a bridge and/or a plate and/or an oscillating weight.

22. Element (10, 10', 10") according to claim 20 or 21, **characterized in that** the functional part forms a decoration (13) and/or a contact surface.
